# EUROPÄISCHE PATENTSCHRIFT

(11) **EP 0 689 297 B1**
(45) Veröffentlichungstag und Bekanntmachung des Hinweises auf die Patenterteilung: **17.09.1997**
(21) Anmeldenummer: 95109448.1
(22) Anmeldetag: 19.06.1995
(51) Int. Cl.: H04B 1/38, H01Q 1/24, H01Q 17/00

(54) **Handfunkgerät**
Portable radio transceiver
Radio émetteur-récepteur portable

(30) Priorität: 24.06.1994 DE 9410296 U
(43) Veröffentlichungstag der Anmeldung: 27.12.1995
(73) Patentinhaber: SIEMENS AKTIENGESELLSCHAFT, 80333 München (DE)
(72) Erfinder: v. Brockdorff, Christian-Friedrich, Dipl.-Ing., D-82057 Icking (DE)

(56) Entgegenhaltungen:
- EP-A- 0 588 365
- EP-A- 0 603 082
- WO-A-90/13152
- US-A- 4 138 681
- PATENT ABSTRACTS OF JAPAN vol. 009 no. 178 (E-330) ,23.Juli 1985 & JP-A-60 048626 (NIPPON DENSHIN DENWA KOSHA) 16.März 1985,
- PATENT ABSTRACTS OF JAPAN vol. 016 no. 570 (E-1297) ,10.Dezember 1992 & JP-A-04 220851 (MITSUBISHI ELECTRIC CORP) 11.August 1992,

## Beschreibung

Die Erfindung bezieht sich auf ein Handfunkgerät mit einer als Richtantenne ausgebildeten, im oberen Bereich des Gerätes auf der kopfabgewandten Seite angeordneten Antenne, mittels der Signale zu einer entfernten Station übertragbar sind.

Handfunkgeräte sind in verschiedenen Ausführungsformen, z.B. als Handgeräte (CB-Funkgeräte, Walkie-Talkies) oder als Handgeräte (Handhelds) für den Mobilfunk verfügbar. Derartige Geräte sind üblicherweise mit einer Antenne versehen, die sich bei normaler Betriebshaltung in unmittelbarer Nähe des Kopfes des Benutzers befindet. Im Sendebetrieb emittiert die Antenne elektromagnetische Funksignale u.a. in Richtung des Kopfes. Außerdem wirkt der Kopf abschattend für die Funksignale.

In jüngster Zeit ist eine Diskussion über eine mögliche negative physiologische Beeinflussung des menschlichen Körpers, insbesondere des Kopfes, durch die elektromagnetischen Funksignale entstanden. Zuverlässige Erkenntnisse liegen hierüber jedoch noch nicht vor.

In der EP 0 508 299 A1 ist ein Funksprechgerät beschrieben, bei dem zur Vorbeugung gegen den möglichen negativen Einfluß der Funksignale der Fußpunkt des strahlenden Teils der Antenne des Handgerätes über dem Gehäuse erhöht angeordnet ist. Zu diesem Zweck ist zwischen dem strahlenden Teil und dem Gehäuse ein nichtstrahlender Teil als Abstandshalter vorgesehen. Durch eine derartige Ausgestaltung der Antenne gelangt nur noch ein unbedeutender Teil der elektromagnetischen Strahlung in den Kopf des Benutzers.

Durch die DE 42 21 121 C1 ist ein Handfunkgerät der eingangs beschriebenen Art bekannt, bei dem eine Steuereinheit vorgesehen ist, durch die die Antenne zu der entfernten Station hin ausrichtbar ist.

Die WO 90/13152 beschreibt eine Duplex-Antenne für einen portablen Funk-Sende/Empfänger, die im oberen Bereich des Gerätes auf der kopfabgewandten Seite angeordnet ist und ein Paar von koplanaren Strahlungselementen aufweist, die auf die Sendefrequenz bzw. Empfangsfrequenz abgestimmt sind und gegeneinander entkoppelt sind.

Bei einem Schnurlos-Telefon gemäß der JP-A-60 048 626 ist zur Reduzierung des Einflusses elektromagnetischer Strahlung auf den Kopf eines Benutzers ein Schutzelement aus einer Laminat-Struktur vorgesehen, die lediglich die von der Antenne abgestrahlte elektromagnetische Welle reflektiert bzw. absorbiert.

Portable Funktelefone mit entsprechender Anordnung der Antenne am Gerät zum Schutz des Benutzers vor elektromagnetischer Strahlung sind ferner durch die EP-A-0 603 082 und die JP-A-04 220 851 bekannt.

Der Erfindung liegt die Aufgabe zugrunde, für tragbare Handfunkgeräte (Handheld-Geräte) eine Antennenlösung einfacher Art zu realisieren, bei der die HF-Strahlung auf den Benutzer erheblich reduziert wird, ohne daß dabei eine merkliche Einbuße der Verbindungsqualität auftritt.

Diese Aufgabe wird gemäß der Erfindung in der Weise gelöst, daß die Oberfläche des Gerätes mit einer HF-absorbierenden Schicht überzogen ist.

Nachstehend wird die Erfindung näher beschrieben.

Durch die Verwendung der Richtantenne und deren Anordnung auf der kopfabgewandten Seite, d.h. der Rückseite eines Handheld-Gerätes wird eine ausreichende Reduzierung der Abstrahlung auf den Kopf des Benutzers erreicht. Die Antenne ist dabei oberhalb des Griffbereichs bzw. der Griffmulde des Handheld-Gerätes angeordnet. Eine durch eine Richtantenne bedingte Verschlechterung der Sende-/Empfangseigenschaften des Gerätes ist nicht gegeben, wenn die Rückwärtsdämpfung der Richtantenne in etwa der üblichen Abschattung durch den Kopf des Benutzers entspricht. Von besonderem Vorteil ist hierbei der zusätzliche Antennengewinn in der Vorwärts-Richtung.

Eine wesentliche Verbesserung hinsichtlich der gewünschten Eigenschaften wird durch Überziehen der Oberfläche des Gerätes mit einer HF-absorbierenden Schicht erreicht. Hierzu ist folgendes zu sagen: Falls die Richtantenne in ihren geometrischen Abmessungen nicht genügend klein gegenüber der HF-Wellenlänge ist, wirkt das Gerätegehäuse als Sekundärstrahler in allen Richtungen und strahlt damit auch auf den Benutzer ein. Eine solche Sekundärstrahlung des Gehäuses wird jedoch vermieden, wenn die HF-Sender-Strahlung absorbiert wird. Dies erfolgt durch die vorstehend genannte Maßnahme. Die für die Übertragungsqualität nachteilige Handempfindlichkeit des Handheld wird damit ebenfalls unterbunden.

## Patentansprüche

1. Handfunkgerät mit einer als Richtantenne ausgebildeten, im oberen Bereich des Gerätes auf der kopfabgewandten Seite angeordneten Antenne, mittels der Signale zu einer entfernten Station übertragbar sind, dadurch **gekennzeichnet**, daß die Oberfläche des Gerätes mit einer HF-absorbierenden Schicht überzogen ist.

## Claims

1. Portable radio transceiver having an antenna which is constructed as a directional antenna and is arranged in the upper region of the device on the side facing away from the head, and by means of which signals can be transmitted to a remote station, characterized in that the surface of the device is covered with an RF-absorbing layer.

## Revendications

1. Poste émetteur-récepteur portatif, comportant une antenne directive, qui est disposée en haut du poste du côté éloigné de la tête et au moyen de laquelle des signaux peuvent être transmis à une station éloignée, **caractérisé en ce que** la surface du poste est recouverte d'une couche absorbant les hautes fréquences.
